Europäisches Patentamt

European Patent Office

Office européen des brevets

(19)

(11) Numéro de publication : **0 133 559**
**B1**

(12)

# FASCICULE DE BREVET EUROPÉEN

(45) Date de publication du fascicule du brevet :
25.03.87

(51) Int. Cl.⁴ : **D 21 C 5/02**

(21) Numéro de dépôt : **84109241.4**

(22) Date de dépôt : **03.08.84**

(54) **Procédé pour la réqénération des vieux papiers.**

(30) Priorité : 08.08.83 FR 8313136

(43) Date de publication de la demande :
27.02.85 Bulletin 85/09

(45) Mention de la délivrance du brevet :
25.03.87 Bulletin 87/13

(84) Etats contractants désignés :
AT BE CH DE GB IT LI NL SE

(56) Documents cités :
EP-A- 0 040 873
DE-C- 288 640
FR-A- 2 016 681
ABSTRACT BULLETIN OF THE INSTITUTE OF PAPER
CHEMISTRY, vol. 50, no. 9, March 1980, page 883,
résumé 8219, Appleton, Wisc., US; "Slime in the
water cycle - a problem for the papermaker"
TAPPI, vol. 65, no. 4, avril 1982, pages 59-63, Atlanta,
GA., US; F.D. BLAKE: "New repulpable adhesive
systems must meet application needs"

(73) Titulaire : **INTEROX Société Anonyme**
**Rue du Prince Albert, 33**
**B-1050 Bruxelles (BE)**

(72) Inventeur : **Hageman, Jacques**
**Rue Haute, 65**
**B-5871 Corbais (BE)**
Inventeur : **Meyers, Liliane**
**Avenue Josse de Heyn, 96**
**B-1090 Bruxelles (BE)**

(74) Mandataire : **Lederer, Franz, Dr. et al**
**Vanderwerth, Lederer & Riederer Patentanwälte Luci-**
**le-Grahn-Strasse 22**
**D-8000 München 80 (DE)**

# 0 133 559

**Description**

La présente invention concerne un procédé pour la régénération des vieux papiers en vue de leur recyclage.

Les vieux papiers de récupération constituent une source de matière première pour l'industrie papetière. Ces vieux papiers sont désintégrés en phase aqueuse, le plus souvent dans un pulpeur, de manière à obtenir une pâte qui est utilisée en général pour la fabrication de papiers et de cartons d'emballage ou de papier journal. Etant donné que le taux d'utilisation des fibres récupérées dans les produits d'emballage est déjà très élevé, on a également envisagé d'autres débouchés pour les vieux papiers tels que la fabrication de papier impression-écriture ou celle de papier « tissue ». Dans ce cas, il est important de disposer d'une pâte présentant un degré suffisant de blancheur. Un degré de blancheur satisfaisant peut être atteint en ayant recours à des traitements complémentaires de désencrage et/ou de blanchiment. D'autres traitements encore (rétention en cuve, élimination des impuretés lourdes et légères, dépastillage, raffinage, etc.) sont souvent inclus dans les cycles de régénération.

Le recyclage des vieux papiers rencontre un obstacle important qui est la présence de contaminants de type polymérique. Ces contaminants ont été le plus souvent additionnés intentionnellement lors de la fabrication du papier proprement dite pour ajouter aux structures fibreuses des propriétés particulières ou lors de la mise en œuvre de ces papiers. Les contaminants polymériques sont de natures diverses et peuvent être des acétates de polyvinyle, des copolymères acétate de vinyle-éthylène, des cires, des latex styrène-butadiène, du polystyrène, des résines d'hydrocarbone, des polyisoprènes, des esters de résines, du caoutchouc butylique ou des polyamides. Ils se retrouvent dans des produits spécifiques tels que les bandes de scellement, les adhésifs utilisés pour la reliure, les cartons enduits, les adhésifs par pression, les enveloppes et les adhésifs utilisés pour coller les cartons.

Les contaminants polymériques et plus particulièrement les colles ou adhésifs sont particulièrement gênants. Ils forment des agglomérats qui se déposent dans les installations pour la régénération des vieux papiers et dans les machines pour la fabrication du papier ou du carton. En outre, ces agglomérats nuisent à l'aspect final de la feuille de papier ou du carton et ils provoquent des déchirures lorsque le papier est utilisé comme papier impression notamment dans les rotatives.

Pour améliorer la qualité de la pâte produite, on a proposé de désintégrer les vieux papiers en présence d'une solution aqueuse alcaline. Celle-ci peut contenir un hydroxyde alcalin, tel que l'hydroxyde de sodium éventuellement en mélange avec le peroxyde d'hydrogène ou encore un peroxyde de métal alcalin tel que le peroxyde de sodium. La pâte obtenue peut, si nécessaire, être désencrée par lavage ou par flottation.

Or on a constaté que, plus les traitements en vue d'améliorer la blancheur de la pâte sont poussés, plus l'effet dégradant des contaminants polymériques est marqué.

Dans le brevet FR-A-2 016 681 on décrit un procédé pour récupérer un matériau fibreux à partir de déchets de structure fibreuse contenant un liant à base d'alcool polyvinylique traité à l'acide titanique selon lequel on traite les déchets avec une solution aqueuse d'un acide minéral contenant du peroxyde d'hydrogène. Dans ce procédé connu, l'acide minéral peut être de l'acide chlorhydrique, de l'acide sulfurique ou de l'acide nitrique. On a toutefois observé dans la pratique que ce procédé connu ne donne pas satisfaction dans le cas de vieux papiers contenant des contaminants polymériques insolubles dans l'eau autres que l'alcool polyvinylique traité à l'acide titanique.

L'invention a pour but de fournir un procédé pour la régénération des vieux papiers qui permet d'éviter les inconvénients cités ci-dessus et plus particulièrement d'éviter la formation de points de colle à la surface des feuilles de papier ou de carton, dans le cas des vieux papiers contenant des contaminants polymériques différents de l'alcool polyvinylique traité à l'acide titanique.

L'invention concerne à cet effet un procédé pour la régénération des vieux papiers contenant des contaminants polymériques qui comprend la mise en pâte des vieux papiers en présence d'une solution aqueuse acide contenant au moins un composé peroxydé sélectionné parmi les peracides.

Le procédé convient tout particulièrement pour la régénération de vieux papiers contenant des colles ou adhésifs.

On utilise les peracides organiques ou inorganiques. Comme peracide organique, on peut utiliser avantageusement l'acide peracétique, l'acide perpropionique ou l'acide perbenzoïque. De bons résultats ont été obtenus avec l'acide peracétique. Comme peracide inorganique, on peut utiliser avantageusement l'acide permonosulfurique appelé également acide de Caro.

Lors de la mise en pâte ou désintégration des vieux papiers, le pH, en début de désintégration est inférieur à 7 et ne dépasse en général pas 6,5 et de préférence pas 6. Il est en général d'au moins 2,5 et le plus souvent d'au moins 3. De bons résultats sont obtenus lorsque le pH de la pâte en début de désintégration est de 4 à 6.

Le peracide est en général mis en œuvre en quantités calculées en équivalents peroxyde d'hydrogène, de 0,01 à 4 % et le plus souvent de 0,05 à 2,5 % par rapport au poids de vieux papiers secs (g/100 g de matières sèches MS).

Selon sa constante d'acidité et sa concentration, le peracide peut être utilisé conjointement avec un autre acide, une base ou un mélange tampon pour ajuster le pH en début de désintégration aux valeurs

2

précitées. Ainsi lorsqu'on utilise de l'acide permonosulfurique, on ajoute simultanément à la pâte de petites quantités d'une base telle que par exemple un hydroxyde, un carbonate ou un silicate de métal alcalin. De bons résultats ont été obtenus avec des mélanges contenant de l'acide permonosulfurique et une quantité d'hydroxyde de sodium insuffisante pour neutraliser tout l'acide.

On peut introduire dans l'appareil utilisé pour la désintégration des vieux papiers un ou plusieurs agents complexants. Divers types d'agents complexants peuvent être utilisés à cette fin. On peut ainsi utiliser des acides ou des sels d'acides choisis parmi les acides organophosphoniques, les acides éthylènediaminetétraacétique, diéthylènediaminepentaacétique, gluconique, polyitacononique, tartrique ou citrique. Ces agents complexants peuvent être mis en œuvre en quantités variables. En général on utilise de 0 à 2,5 et le plus souvent de 0,01 à 2 % d'agent complexant par rapport au poids de vieux papiers secs.

On peut en outre mettre en œuvre des stabilisants du peracide et/ou d'autres additifs tels que par exemple des collecteurs et des moussants lorsqu'on prévoit une étape de désencrage par flottation ou des dispersants lorsqu'on prévoit une étape de désencrage par lavage.

Les collecteurs les plus souvent utilisés sont des acides gras ou des mélanges d'acides gras. Les collecteurs peuvent être introduits à raison de 0 à 5 % et de préférence 0,01 à 4 % du poids de vieux papiers secs.

Les moussants sont des agents tensioactifs et plus particulièrement les agents tensioactifs anioniques ou non ioniques. Une liste d'agents tensioactifs est donnée dans l'ouvrage « Surface Active Agents » de A. M. Schwarz et J. W. Perry. Les moussants peuvent être introduits à raison de 0 à 3 % et de préférence 0,01 à 2 % du poids de vieux papiers secs.

On peut également utiliser des produits qui présentent à la fois les propriétés des moussants et celles des collecteurs, comme par exemple les savons sodiques ou potassiques. Les savons peuvent être introduits à raison de 0 à 10 % et de préférence de 0,01 à 8 % du poids de vieux papiers secs.

Les dispersants utilisés dans le cas du désencrage par lavage sont le plus souvent des agents tensioactifs anioniques, cationiques ou non ioniques. Parmi ceux-ci figurent notamment les sulfates, sulfonates et polyétheralcools d'alkyle ou d'aryle. Ils sont en général introduits à raison de 0 à 5 % et de préférence de 0,01 à 4 % du poids de vieux papiers secs.

La mise en pâte peut se faire par désintégration des vieux papiers selon diverses techniques connues en elles-mêmes. Divers appareils convenant pour cet usage peuvent être utilisés. On peut ainsi utiliser des broyeurs fonctionnant à haute consistance de pâte. Des exemples d'appareils de ce type sont décrits dans Tappi Monograph Series n° 31, 1967, Deinking Waste Paper. De bons résultats ont été obtenus dans les pulpeurs. La consistance des pâtes peut varier dans de larges limites selon le type d'appareil utilisé. En général, elle est comprise entre 1 à 50 % et de préférence 1 à 35 %. En pulpeur, on utilise en général des consistances de pâtes comprises entre 1 et 15 % et de préférence 1 et 10 %.

La température dans l'appareil utilisé pour la désintégration est habituellement comprise entre 20 et 130 °C. Lorsqu'on opère en pulpeur, on utilise en général des températures d'au moins 30 °C et le plus souvent d'au moins 45 °C ; dans ce cas la température ne dépasse en général pas 90 °C et le plus souvent pas 85 °C. Le temps de séjour dans l'appareil de désintégration peut varier dans de larges limites selon le type d'appareil utilisé. Il est compris habituellement entre 30 sec et 3 heures. En pulpeur, il est en général compris entre 5 et 120 minutes.

La désintégration des vieux papiers peut être précédée d'une ou de plusieurs autres étapes telles qu'un broyage ou une imprégnation et peut être suivie d'une ou de plusieurs autres étapes telles qu'une désintégration supplémentaire, une dispersion, une épuration, un blanchiment, une rétention en cuve, un dépastillage, un épaississage, une dilution ou un désencrage par flottation ou par lavage, le nombre d'étapes et leur succession dépendant des types de vieux papiers et de la blancheur finale souhaitée. De bons résultats ont été obtenus lorsque la désintégration est suivie d'une étape d'élimination des encres par flottation. Dans ce cas, on peut procéder à une alcalinisation préalable de la pâte de manière à ce que la flottation se déroule à un pH supérieur à 7. Le pH de la pâte, lors de la flottation et plus particulièrement en début de flottation est en général de 7 à 10. En début de flottation, il est le plus souvent égal à environ 9. A cette fin, divers composés à caractère alcalin sont ajoutés à la pâte avant flottation. De bons résultats ont été obtenus avec un hydroxyde, un carbonate ou un silicate de métal alcalin tel que le sodium. La flottation est réalisée à des températures et des consistances de pâtes bien connues par elles-mêmes. En général la température est de 10 à 60 °C et le plus souvent de 15 à 50 °C et la consistance de pâte de 0,1 à 5 % et le plus souvent de 0,2 à 3 %.

Un procédé adéquat consiste à désintégrer les vieux papiers conformément au procédé selon l'invention, après des traitements préliminaires éventuels tels que le broyage ou l'imprégnation et ensuite à soumettre la pâte obtenue après un dépastillage éventuel à un désencrage par flottation à pH alcalin.

Le procédé selon l'invention permet d'éviter la formation d'agglomérats dans les installations pour la régénération des vieux papiers et plus particulièrement dans les canalisations ainsi que dans les installations pour la fabrication des papiers et du carton à partir de pâte recyclée et plus particulièrement sur les toiles, feutres, rouleaux de presses et cylindres sécheurs. En outre, il permet d'éviter la formation de points de colle sur les feuilles de papier. Le procédé permet également d'éliminer les supports siliconés des vieux papiers recyclés provenant d'étiquettes auto-collantes. Enfin, il permet d'améliorer la blancheur et de réduire la durée de la désintégration.

Afin d'illustrer l'invention sans pour autant en limiter la portée, on donne ci-après des exemples pratiques de réalisation.

## Exemples

Les essais ont été réalisés dans un pulpeur et dans une cellule de flottation de laboratoire.

Le pulpeur ou désintégrateur est conforme à celui décrit dans la norme NF-Q-50-002. La consistance de travail est de 5 % et la durée de 40 minutes.

La cellule de flottation a une capacité de 20 l et est du type VOITH.

Les essais ont été effectués sur un mélange contenant 80 % de journaux et de magazines dans un rapport 6 : 4 et 20 % de bandes adhésives et de leur support siliconé.

La blancheur des vieux papiers désintégrés dans l'eau est égale à 49,7 % par rapport à la blancheur de $BaSO_4$ mesurée au moyen d'un réflectomètre ELREPHO (ZEISS) équipé du filtre R 457 et d'un piège à brillance (norme ISO 2470).

Le papier est déchiqueté à la main, avant d'être introduit dans le pulpeur. On ajoute ensuite la solution aqueuse contenant tous les réactifs sauf le peracide.

La dureté de l'eau utilisée pour l'obtention de la pâte est de 10 degrés allemands. Le mélange est porté à la température d'environ 50 °C et il est mélangé pendant une minute avant l'introduction du peracide.

La pâte retirée du pulpeur est diluée à environ 0,8 % de consistance et traitée à environ 40-44 °C dans la cellule de flottation. Si nécessaire, la pâte a été alcalinisée au préalable par addition d'hydroxyde de sodium de manière à ce que le pH de la pâte en début de flottation soit égal à environ 9. Après 15 minutes de flottation, un échantillon est prélevé pour mesure de blancheur.

Deux essais de désintégration des vieux papiers ont été réalisés à titre de comparaison avec respectivement une solution alcaline de peroxyde d'hydrogène (essai 1R) et une solution acide exempte de peracide (essai 2R).

Deux essais ont été réalisés selon l'invention en présence respectivement d'une solution acide d'acide persulfurique (essai 3) et d'une solution acide d'acide peracétique (essai 4).

Les conditions opératoires et les résultats obtenus sont rassemblés au Tableau I ci-après.

Tableau I

| ESSAIS | 1R | 2R | 3 | 4 |
|---|---|---|---|---|
| **Pulpeur** | | | | |
| Additifs | | | | |
| $H_2O_2$, g/100 g MS | 0,5**** | – | – | – |
| acide sulfurique, g/100 g MS | – | 0,32 | – | – |
| acide persulfurique, g/100 g MS | – | – | 1,78**** | – |
| acide peracétique*, cm³/100 g MS | – | – | – | 2,15**** |
| NaOH, g/100 g MS | 1,0 | – | 3,22 | – |
| silicate de sodium**, g/100 g MS | 3,0 | – | – | – |
| collecteur***, g/100 g MS | 1,0 | 1,0 | 1,0 | 1,0 |
| pH d'introduction | 10,6 | 4,5 | 4,5 | 4,5 |
| **Cellule de flottation** | | | | |
| Additifs | | | | |
| NaOH, g/100 g MS | – | – | 1,25 | 1,25 |
| pH initial | 9,2 | 8,9 | 8,9 | 8,9 |
| Blancheur | 60,8 | 53,7 | 57,2 | 57,7 |
| Points de colle | élimination partielle | élimination importante | élimination totale | élimination presque totale. Les rares agglomérats n'ont plus de pouvoir collant. |

\* solution à l'équilibre contenant 378,5 g/l d'acide peracétique et 63,2 g/l de peroxyde d'hydrogène
\** 38° Baumé ($Na_2O \cdot 3,3SiO_2$)
\*** SERFAX MT90 (surfactif sodé anionique biodégradable)
\**** équivalent à 0,235 % d'oxygène actif

## Revendications

1. Procédé pour la régénération des vieux papiers contenant des contaminants polymériques selon lequel on traite les vieux papiers avec une solution aqueuse acide contenant un composé peroxydé, caractérisé en ce qu'on sélectionne le composé peroxydé parmi les peracides.

2. Procédé selon la revendication 1, caractérisé en ce qu'on met en œuvre une solution aqueuse d'acide permonosulfurique.

3. Procédé selon la revendication 1, caractérisé en ce qu'on met en œuvre une solution aqueuse d'acide peracétique.

4. Procédé selon l'une quelconque des revendications 1 à 3, caractérisé en ce qu'on met en œuvre une solution aqueuse dont le pH est compris entre 3 et 6.

5. Procédé selon l'une quelconque des revendications 1 à 4, caractérisé en ce que la teneur en composé peroxydé calculée en équivalent peroxyde d'hydrogène est de 0,05 à 2,5 % en poids par rapport au poids de vieux papiers secs.

6. Procédé selon l'une quelconque des revendications 1 à 5, caractérisé en ce que la température est de 30 à 85 °C.

7. Procédé selon l'une quelconque des revendications 1 à 6, caractérisé en ce que les vieux papiers sont mis en pâte dans un pulpeur à une consistance de pâte de 1 à 15 %.

8. Procédé selon l'une quelconque des revendications 1 à 7, caractérisé en ce que la pâte obtenue est désencrée par flottation.

9. Procédé selon la revendication 8, caractérisé en ce que la flottation est réalisée à pH alcalin.

## Claims

1. Process for recovering waste paper containing polymer contamination whereby waste paper is treated with an aqueous acid solution containing a peroxide compound characterized in that the peroxide compound is selected among the per-acids.

2. Process according to claim 1, characterized in that an aqueous solution of permonosulfuric acid is used.

3. Process according to claim 1, characterized in that an aqueous solution of per-acetic acid is used.

4. Process according to one of claims 1-3, characterized in that an aqueous solution is used, the pH of which is between 3 and 6.

5. Process according to one of claims 1-4, characterized in that the content of peroxide compound calculated as equivalents of hydrogen peroxide is from 0,05 to 2,5 % by weight based on the weight of dry waste paper.

6. Process according to one of claims 1-5, characterized in that the temperature is from 30 to 85 °C.

7. Process according to one of claims 1-6, characterized in that the waste paper is pasted in a pulper to yield a paste with a content of 1-15 %.

8. Process according to one of claims 1-7, characterized in that the paste obtained is de-inked by flottation.

9. Process according to claim 8, characterized in that the flottation is performed at an alcaline pH.

## Patentansprüche

1. Verfahren zur Rückgewinnung von Altpapier, welches Polymerverunreinigungen enthält, wobei man das Altpapier mit einer wäßrigen, sauren, eine Peroxydverbindung enthaltenden Lösung behandelt, dadurch gekennzeichnet, daß man die Peroxydverbindung unter den Persäuren auswählt.

2. Verfahren nach Anspruch 1, dadurch gekennzeichnet, daß man eine wäßrige Lösung von Permonoschwefelsäure einsetzt.

3. Verfahren nach Anspruch 1, dadurch gekennzeichnet, daß man eine wäßrige Lösung von Peressigsäure einsetzt.

4. Verfahren nach einem der Ansprüche 1 bis 3, dadurch gekennzeichnet, daß man eine wäßrige Lösung einsetzt, deren pH-Wert zwischen 3 und 6 liegt.

5. Verfahren nach einem der Ansprüche 1 bis 4, dadurch gekennzeichnet, daß der Gehalt an Peroxydverbindung berechnet als Äquivalent Wasserstoffperoxyd 0,05 bis 2,5 Gew.-% bezogen auf das Gewicht des trockenen Altpapiers beträgt.

6. Verfahren nach einem der Ansprüche 1 bis 5, dadurch gekennzeichnet, daß die Temperatur 30 bis 85 °C beträgt.

7. Verfahren nach einem der Ansprüche 1 bis 6, dadurch gekennzeichnet, daß das Altpapier in einem Pulper in einer Papierbrei mit einem Stoffgehalt von 1 bis 15 % übergeführt wird.

8. Verfahren nach einem der Ansprüche 1 bis 7, dadurch gekennzeichnet, daß der erhaltene Brei durch Flottation von Druckfarbe befreit wird.

9. Verfahren nach Anspruch 8, dadurch gekennzeichnet, daß die Flottation bei einem alkalischen pH-Wert durchgeführt wird.